(19) Europäisches Patentamt
European Patent Office
Office européen des brevets

(11) **EP 4 625 470 A1**

(12) **EUROPEAN PATENT APPLICATION**

(43) Date of publication:
**01.10.2025 Bulletin 2025/40**

(21) Application number: **25160226.4**

(22) Date of filing: **26.02.2025**

(51) International Patent Classification (IPC):
*H01J 49/00* *(2006.01)*

(52) Cooperative Patent Classification (CPC):
**H01J 49/0009; H01J 49/009**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.03.2024 US 202418615607**

(71) Applicant: **Thermo Finnigan LLC San Jose, CA 95134 (US)**

(72) Inventors:
• **SENKO, Michael W.**
  **San Jose, 95134 (US)**
• **McALISTER, Graeme C.**
  **San Jose, 95134 (US)**

(74) Representative: **Boult Wade Tennant LLP Salisbury Square House 8 Salisbury Square London EC4Y 8AP (GB)**

(54) **CALIBRATION OF AN IMAGE CURRENT-BASED MASS ANALYZER INCLUDED IN A MASS SPECTROMETER**

(57) An illustrative method comprises determining, based on a mass analysis performed by an electron multiplier-based mass analyzer on a first ion population produced from a sample, a mass spectrum comprising one or more peaks representing intensity as a function of mass-to-charge ratio (m/z) of the first ion population across a range of m/z values; determining, based on the mass spectrum, a total ion count of the first ion population and a peak ion count associated with a peak located at a particular m/z value; determining, based on the total ion count of the first ion population and the peak ion count, a total ion count of a second ion population produced from the sample and injected into an image current-based mass analyzer for mass analysis; and setting, based on the total ion count of the second ion population, a calibration parameter for the image current-based mass analyzer.

400

Determine, based on a mass analysis performed by an electron multiplier-based mass analyzer on a first ion population produced from a sample, a mass spectrum comprising one or more peaks representing intensity as a function of m/z of the first ion population across a range of m/z values
402

Determine, based on the mass spectrum, a total ion count of the first ion population across the range of m/z values and a peak ion count associated with a peak located at a particular m/z value within the range of m/z values
404

Determine, based on the total ion count of the first ion population and the peak ion count, a total ion count of a second ion population produced from the sample and injected into an image current-based mass analyzer for mass analysis
406

Set, based on the total ion count of the second ion population, a calibration parameter for the image current-based mass analyzer
408

Fig. 4

EP 4 625 470 A1

**Description**

BACKGROUND INFORMATION

Automatic gain control is important for image current-based mass analyzers (e.g., orbital electrostatic trap mass analyzers, such as Orbitrap™ mass analyzers, manufactured and sold by Thermo Fisher Scientific, Inc., Waltham, MA) included in a mass spectrometer to ensure mass accuracy and precision. This is because image current-based mass analyzers are susceptible to space charge effects, and therefore require the injection of a reproducible number of ions that is provided by automatic gain control. Unfortunately, due to chemical noise, ion transfer inefficiencies, spray instability, and/or other factors, it can be difficult to accurately determine a total number of ions that are actually injected into an image current-based mass analyzer.

SUMMARY

The following description presents a simplified summary of one or more aspects of the systems and methods described herein. This summary is not an extensive overview of all contemplated aspects and is intended to neither identify key or critical elements of all aspects nor delineate the scope of any or all aspects. Its sole purpose is to present one or more aspects of the systems and methods described herein as a prelude to the detailed description that is presented below.

In some illustrative embodiments, a system comprises a memory storing instructions and one or more processors communicatively coupled to the memory and configured to execute the instructions to perform a process comprising: determining, based on a mass analysis performed by an electron multiplier-based mass analyzer on a first ion population produced from a sample, a mass spectrum comprising one or more peaks representing intensity as a function of mass-to-charge ratio (m/z) of the first ion population across a range of m/z values; determining, based on the mass spectrum, a total ion count of the first ion population across the range of m/z values and a peak ion count associated with a peak located at a particular m/z value within the range of m/z values; determining, based on the total ion count of the first ion population and the peak ion count, a total ion count of a second ion population produced from the sample and injected into an image current-based mass analyzer for mass analysis; and setting, based on the total ion count of the second ion population, a calibration parameter for the image current-based mass analyzer.

In some illustrative embodiments, a system includes an electron multiplier-based mass analyzer configured to perform a mass analysis on a first ion population produced from a sample; a controller configured to determine, based on the mass analysis performed by the electron multiplier-based mass analyzer, a mass spectrum comprising one or more peaks representing intensity as a function of m/z of the first ion population across a range of m/z values, and determine, based on the mass spectrum, a total ion count of the first ion population across the range of m/z values and a peak ion count associated with a peak located at a particular m/z value within the range of m/z values; and an image current-based mass analyzer configured to perform, subsequent to the mass analysis performed by the electron multiplier-based mass analyzer, a mass analysis on a second ion population produced from the sample; wherein the controller is further configured to: determine, based on the mass analysis performed by the image current-based mass analyzer on the second ion population, an additional mass spectrum comprising one or more peaks representing intensity as a function of m/z of the second ion population across the range of m/z values, determine, based on the additional mass spectrum, an additional peak ion count associated with a peak located at the particular m/z value within the range of m/z values, and determine, based on the total ion count of the first ion population, the peak ion count, and the additional peak ion count, a total ion count of the second ion population.

In some illustrative embodiments, a method comprises determining, based on a mass analysis performed by an electron multiplier-based mass analyzer on a first ion population produced from a sample, a mass spectrum comprising one or more peaks representing intensity as a function of m/z of the first ion population across a range of m/z values; determining, based on the mass spectrum, a total ion count of the first ion population across the range of m/z values and a peak ion count associated with a peak located at a particular m/z value within the range of m/z values; determining, based on the total ion count of the first ion population and the peak ion count, a total ion count of a second ion population produced from the sample and injected into an image current-based mass analyzer for mass analysis; and setting, based on the total ion count of the second ion population, a calibration parameter for the image current-based mass analyzer.

In some illustrative embodiments, a non-transitory computer-readable medium stores instructions that, when executed, direct a processor of a computing device to perform a process comprising: determining, based on a mass analysis performed by an electron multiplier-based mass analyzer on a first ion population produced from a sample, a mass spectrum comprising one or more peaks representing intensity as a function of m/z of the first ion population across a range of m/z values; determining, based on the mass spectrum, a total ion count of the first ion population across the range of m/z values and a peak ion count associated with a peak located at a particular m/z value within the range of m/z values; determining, based on the total ion count of the first ion population and the peak ion count, a total ion count of a second ion population produced from the sample and injected into an image current-based mass analyzer for mass analysis; and setting, based on the total ion count of the second ion population, a calibration parameter for the image current-based mass analyzer.

BRIEF DESCRIPTION OF THE DRAWINGS

The accompanying drawings illustrate various embodiments and are a part of the specification. The illustrated embodiments are merely examples and do not limit the scope of the disclosure. Throughout the drawings, identical or similar reference numbers designate identical or similar elements.

Fig. 1 shows an illustrative configuration in which a calibration management system is communicatively coupled with a mass spectrometer.

Fig. 2 shows illustrative components of a calibration management system.

Fig. 3 shows a functional diagram of an illustrative implementation of a mass spectrometer.

Fig. 4 shows an illustrative method of calibrating an image current-based mass analyzer included in a mass spectrometer.

Fig. 5 shows an illustrative mass spectrum of an ion population mass analyzed by an electron multiplier-based mass analyzer.

Fig. 6 shows illustrative modules of a calibration management system that may be used to determine a calibration parameter for an image current-based mass analyzer.

Figs. 7A and 7B show mass spectra that may be determined by a calibration management system.

Figs. 8A and 8B show mass spectra that may be determined by a calibration management system.

Fig. 9 shows an illustrative computing device that may be specifically configured to perform one or more of the operations, methods, and processes described herein.

DETAILED DESCRIPTION

Systems and methods for calibrating an image current-based mass analyzer included in a mass spectrometer are described herein. For example, as described herein, a calibration management system may determine, based on a mass analysis performed by an electron multiplier-based mass analyzer on a first ion population produced from a sample, a mass spectrum comprising one or more peaks representing intensity as a function of mass-to-charge ratio (m/z) of the first ion population across a range of m/z values, determine, based on the mass spectrum, a total ion count of the first ion population across the range of m/z values and a peak ion count associated with a peak located at a particular m/z value within the range of m/z values, determine, based on the total ion count of the first ion population and the peak ion count, a total ion count of a second ion population produced from the sample and injected into an image current-based mass analyzer for mass analysis, and set, based on the total ion count of the second ion population, a calibration parameter for the image current-based mass analyzer.

As used herein, "calibrating" an image current-based mass analyzer refers to setting a calibration parameter for the image current-based mass analyzer. A "calibration parameter" refers to any setting, coefficient, and/or other parameter that is used to convert or map frequency at which ions oscillate within the image current-based mass analyzer to m/z. As described herein, setting of an appropriate calibration parameter depends on the total ion count of ions that are injected into the image current-based mass analyzer for mass analysis.

"Ion populations" as used herein may refer to single or multiply charged particles having m/z within a prescribed range. Accordingly, "ion counts" (e.g., total ion counts and peak ion counts referred to herein) may refer to a count of actual ions or a measure of total charge associated with the actual ions.

The systems and methods described herein may determine an accurate total ion count of a population of ions within an image current-based mass analyzer. This may allow for accurate calibration of the image current-based mass analyzer, which may ensure accurate mapping of frequency to m/z for ion populations that are mass analyzed by the image current-based mass analyzer.

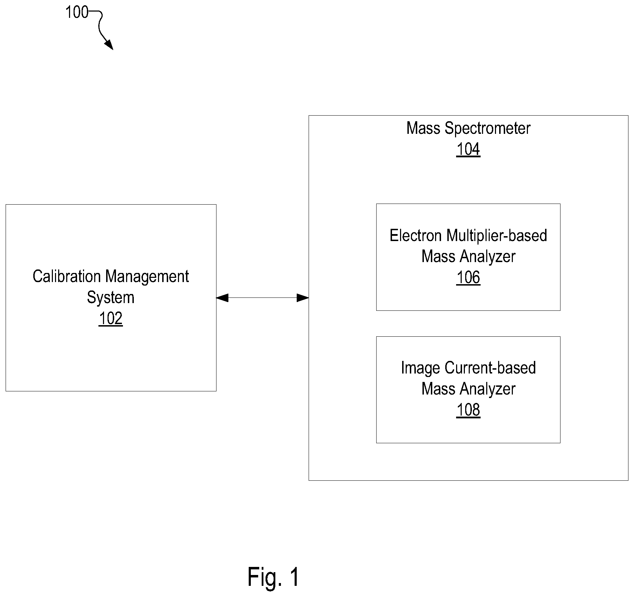

Fig. 1 shows an illustrative configuration 100 in which a calibration management system 102 is communicatively coupled with a mass spectrometer 104. As shown, mass spectrometer 104 includes an electron multiplier-based mass analyzer 106 and an image current-based mass analyzer 108. Mass spectrometer 104 may include additional or alternative components (e.g., one or more additional mass analyzers) as may serve a particular implementation. An illustrative implementation of mass spectrometer 104 includes an Orbitrap™ Tribrid™ mass spectrometer manufactured and sold by Thermo Fisher Scientific, Inc., Waltham, MA.

Electron multiplier-based mass analyzer 106 may be implemented by any type of mass analyzer configured to use electron multiplication and/or any other type of single charge detection capability to detect ions. For example, electron multiplier-based mass analyzer 106 may be implemented by a mass analyzer configured to use electron multiplication to detect ions, such as a linear ion trap, a time-of-flight mass analyzer, a combination of a scintillator with a photomultiplier, etc.

Image current-based mass analyzer 108 may be implemented by any type of mass analyzer that measures frequency at which ions oscillate in the presence of a magnetic or electrostatic field. For example, image current-based mass analyzer 108 may be implemented by a Fourier transform ion cyclotron resonance (FT-ICR) mass analyzer or an electrostatic trap mass analyzer, such as an orbital electrostatic trap mass analyzer, such as an Orbitrap™ mass analyzer.

Electron multiplier-based mass analyzer 106 and image current-based mass analyzer 108 may be used together in any suitable manner. For example, in some implementations (e.g., where mass spectrometer 104 is implemented by an Orbitrap™ Tribrid™ mass spectrometer), electron multiplier-based mass analyzer 106 may be used to measure ion flux and determine an analytical injection time that will provide an appropriate number of ions for analysis by the image current-based mass analyzer 108.

Calibration management system 102 may be configured to perform one or more calibration operations with respect to mass spectrometer 104. For example, calibration management system 102 may be configured to set a calibration parameter for image current-based mass analyzer 108. As described above, the calibration parameter for image current-based mass analyzer 108 refers to any setting, coefficient, and/or other parameter that is used to convert or map frequency (e.g., frequency at which ions oscillate within the image current-based mass analyzer) to m/z.

As described herein, setting of an appropriate calibration parameter for image current-based mass analyzer 108 depends on the total ion count of ions that are injected into the image current-based mass analyzer 108 for mass analysis. For example, an illustrative calibration function to convert from frequency to m/z may be represented by the following equation: $m/z = K / f^2$, where K is a calibration coefficient that may be set by calibration management system 102 and f is the observed frequency. Calibration coefficient K is dependent on the total ion population within image current-based mass analyzer 108. For example, the larger the number of ions within image current-based mass analyzer 108, the lower the frequency will be for motion of ions at any m/z. Other calibration functions (e.g., with higher order terms) may be used to convert from frequency to m/z as may serve a particular implementation. For example, another calibration function to convert from frequency to m/z may be represented by the following equation: $m/z = A/f^2 + B/f^4$, where A and B are calibration coefficients that may be set by calibration management system 102 and f is the observed frequency.

Calibration management system 102 may be implemented by any combination of one or more computing devices. For example, calibration management system 102 may be implemented by a controller included in a mass spectrometer, one or more computing devices configured to be communicatively coupled with mass spectrometer 104, and/or any other local and/or remote computing devices as may serve a particular implementation.

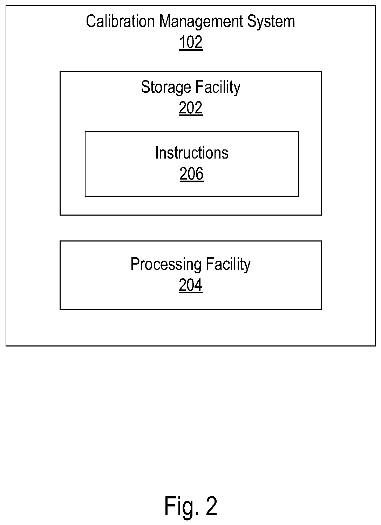

Fig. 2 shows illustrative components of calibration management system 102. For example, calibration management system 102 may include, without limitation, a storage facility 202 and a processing facility 204 selectively and communicatively coupled to one another. Facilities 202 and 204 may each include or be implemented by hardware and/or software components (e.g., processors, memories, communication interfaces, instructions stored in memory for execution by the processors, etc.). In some examples, facilities 202 and 204 may be distributed between multiple devices and/or multiple locations as may serve a particular implementation. For example, facilities 202 may be distributed between one or more local compute resources and one or more remote compute resources communicatively coupled to the local compute resources by way of a network.

Storage facility 202 may maintain (e.g., store) executable data used by processing facility 204 to perform any of the operations described herein. For example, storage facility 202 may store instructions 206 that may be executed by processing facility 204 to perform any of the operations described herein. Instructions 206 may be implemented by any suitable application, software, code, and/or other executable data instance. Storage facility 202 may also maintain any data acquired, received, generated, managed, used, and/or transmitted by processing facility 204.

Processing facility 204 may be configured to perform (e.g., execute instructions 206 stored in storage facility 202 to perform) various processing operations described herein. It will be recognized that the operations and examples described herein are merely illustrative of the many different types of operations that may be performed by processing facility 204. In the description herein, any references to operations performed by calibration management system 102 may be understood to be performed by processing facility 204 of calibration management system 102. Furthermore, in the description herein, any operations performed by calibration management system 102 may include calibration management system 102 directing or instructing another computing system, device, or apparatus to perform the operations.

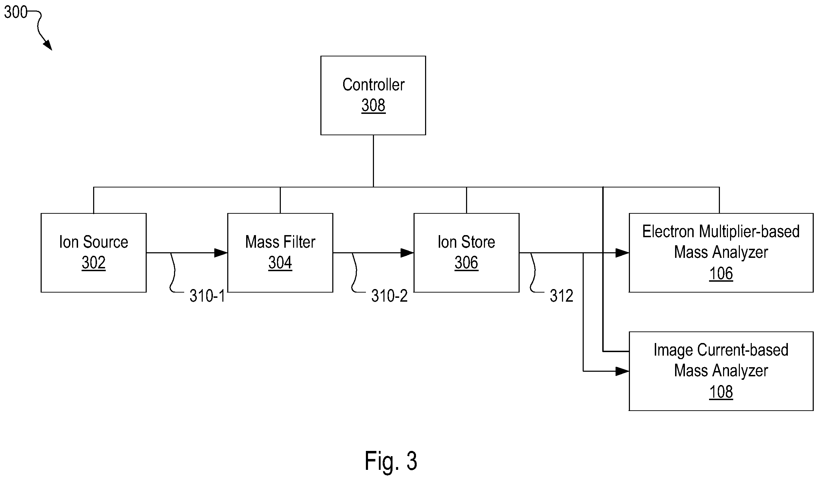

Fig. 3 shows a functional diagram of an illustrative implementation 300 of mass spectrometer 104. As shown, implementation 300 includes an ion source 302, a mass filter 304, an ion store 306, electron multiplier-based mass analyzer 106, image current-based mass analyzer 108, and a controller 308. Implementation 300 may further include any additional or alternative components not shown as may suit a particular implementation (e.g., ion optics, lenses, filters, ion storage devices, ion mobility analyzers, collision cells, ion flux monitor, etc.).

Ion source 302 is configured to produce ions from a sample and deliver the ions in an ion stream 310-1 to mass filter 304. The sample may be produced in any suitable manner, such as by using a liquid chromatography procedure. Ion source 302 may use any suitable ionization technique, including without limitation electron ionization, chemical ionization, matrix assisted laser desorption/ionization, electrospray ionization, atmospheric pressure chemical ionization, atmospheric pressure photoionization, inductively coupled plasma, and the like. Ion source 302 may include various components for producing ions from a sample and delivering the ions to mass filter 304.

Mass filter 304 may be implemented by any suitable mass filter, such as a linear multipole mass filter (e.g., a quadrupole mass filter). Mass filter 304 may filter ion stream 310-1 to selectively transmit ions within a selected m/z range in an ion stream 310-2 to ion store 306. While implementation 300 includes mass filter 304, alternative implementations may omit mass filter 304. In these alternative implementations, ion stream 310-1 may be provided directly to ion store 306 from ion source 302.

Ion store 306 is a device configured to accumulate, over an accumulation time, ions included in ion stream 310-2. As used herein, "accumulation time" refers to the duration of time during which ions produced by ion source 302 accumulate in ion store 306 prior to being released and transferred to mass analyzers 106 and/or 108. Accumulation time may also be known as ion injection time or ion fill time. In some examples, ion store 306 is an ion storage device configured to buffer down-stream processes, such as mass analysis, thereby increasing acquisition speed and instrument sensitivity. In some examples, ion store 306 is a beam-type device or a trapping device, such as a multipole ion guide (e.g., a quadrupole ion guide, a hexapole ion guide, an octapole ion guide, etc.), a linear quadrupole ion trap, a three-dimensional quadrupole ion trap, a cylindrical ion trap, a toroidal ion trap, an orbital electrostatic trap, a Kingdon trap, and the like. In some examples, ion store 306 takes the form of a curved trap (also known as a C-trap) of the type used with orbital electrostatic trap mass spectrometers. In some examples, ion store 306 may be omitted from implementation 300. In these examples, electron multiplier-based mass analyzer 106 may be used as the ion store for image current-based mass analyzer 108.

In some examples, ion store 306 is a collision cell positioned upstream from mass analyzers 106 and 108. As used herein, a "collision cell" may refer to any device arranged to produce product ions via controlled dissociation processes or ion-ion reaction processes and is not limited to devices employed for collisionally-activated dissociation. For example, a collision cell may be configured to fragment the ions using collision induced dissociation (CID), electron transfer dissociation (ETD), electron capture dissociation (ECD), photo-induced dissociation (PID), surface induced dissociation (SID), and the like.

The accumulation of ions in ion store 306 may be regulated by automatic gain control and/or any other technique to achieve a target population of ions in ion store 306 and, hence, a target signal density. The accumulation of ions may be regulated in any suitable way. In some examples, the accumulation of ions in ion store 306 is regulated by a gate apparatus (not shown) that either transmits or blocks ion stream 310-2. The gate may be opened for a given amount of time to meter the appropriate number of ions, after which the gate is closed. The accumulated ions may then be transferred in ion stream 312 from ion store 306 to one or both of mass analyzers 106 and 108. A gate apparatus may also be used to regulate transmission of ion stream 310-2. It will be recognized that other techniques for the regulation of ion accumulation may be used.

Mass analyzers 106 and 108 are configured to perform mass analysis on ion populations, as described herein. In some examples, mass analyzers 106 and 108 may each include an ion detector configured to detect ions at each of a variety of different m/z and responsively generate an electrical signal representative of ion intensity. The electrical signal may be transmitted to controller 308 for processing, such as to construct a mass spectrum of the detected ions. For example, mass analyzers 106 and 108 may each generate or provide data that can be used by controller 308 to construct a mass spectrum.

As used herein, "mass spectrum" or "spectrum" refers to a plot of intensity of ions as a function of m/z of the ions. As used herein, "intensity" or "signal intensity" refers to the response of an ion detector included within mass analyzers 106 and 108 and may represent absolute abundance, relative abundance, ion count, intensity, relative intensity, ion current, or any other suitable measure of ion detection.

Controller 308 may implement some or all of the functionality performed by calibration management system 102. For example, controller 308 may be configured to control operation of various hardware components included in ion source 302, mass filter 304, ion store 306, and mass analyzers 106 and 108. To illustrate, controller 308 may be configured to control an accumulation time of ion store 306, control an oscillatory voltage power supply and/or a DC power supply to supply an RF voltage and/or a DC voltage to mass analyzers 106 and 108, adjust values of the RF voltage and DC voltage to select an effective m/z (including a mass tolerance window) for analysis, and adjust the sensitivity of ion detection performed by mass analyzers 106 and 108 (e.g., by adjusting detector gain).

Controller 308 may also include and/or provide a user interface configured to enable interaction between a user and controller 308. The user may interact with controller 308 via the user interface by tactile, visual, auditory, and/or other sensory type communication. For example, the user interface may include a display device (e.g., liquid crystal display (LCD) display screen, a touch screen, etc.) for displaying information (e.g., mass spectra, notifications, etc.) to the user. The user interface may also include an input device (e.g., a keyboard, a mouse, a touchscreen device, etc.) that allows the user to provide input to controller 308. In other examples, the display device and/or input device may be separate from, but communicatively coupled to, controller 308. For instance, the display device and the input device may be included in a computer (e.g., a desktop computer, a laptop computer, a mobile device, etc.) communicatively connected to controller 308 by way of a wired connection (e.g., by one or more cables) and/or a wireless connection (e.g., Wi-Fi, Bluetooth, near-field communication, etc.).

Controller 308 may include any suitable hardware (e.g., a processor, circuitry, etc.) and/or software as may serve a particular implementation. While Fig. 3 shows that controller 308 is included in implementation 300, controller 308 may alternatively be implemented in whole or in part separately from implementation 300, such as by a computing device communicatively coupled to implementation 300 by way of a wired connection (e.g., a cable) and/or a network (e.g., a local area network, a wireless network (e.g., Wi-Fi), a wide area network, the Internet, a cellular data network, etc.).

The methods, systems, and apparatuses described herein may operate as part of or in conjunction with implementation 300 described herein and/or with any other suitable mass spectrometer or mass spectrometry system, including a combined separation-mass spectrometry system such as a liquid chromatography-mass spectrometry system (LC-MS), a high-performance liquid chromatography-mass spectrometry (HPLC-MS) system, a gas chromatography-mass spectrometry (GC-MS) system, a capillary electrophoresis-mass spectrometry (CE-MS) system, or an ion mobility system (IM-MS). The methods, systems, and apparatuses described herein may also operate in conjunction with a continuous flow sample source, such as in flow-injection mass spectrometry (FI-MS) in which analytes are injected into a solvent without separation in a column and enter the mass spectrometer.

Various factors can affect the ability to accurately determine the total number of ions that are actually injected into image current-based mass analyzer 108.

For example, image current-based mass analyzer 108 may not be able to detect chemical noise that falls below a detection threshold of the image current-based mass analyzer 108. This chemical noise is also referred to as dark ions (or dark ion current or dark ion signal), and may originate from various sources, such as inherent sample heterogeneity, solvent noise, residual gases, contamination on the sample or instrument surfaces, electronic noise, etc. The chemical noise typically is beneath the detection threshold of the image current-based mass analyzer 108, but contributes to the total ion count of ions that are in the image current-based mass analyzer 108.

Ion transfer inefficiencies can also affect the total ion count of ions that are in the image current-based mass analyzer 108. Ion transfer inefficiencies may refer to loss of ions that may occur as ions are injected into the image current-based mass analyzer 108 for mass analysis. In some configurations, this loss of ions may be due to saturation of ion store 306 (e.g., a C-trap) that may occur during the ion transfer process.

To illustrate, as mentioned, electron multiplier-based mass analyzer 106 may be used to measure ion flux of ion stream 312 (i.e., the rate at which ions are to be injected into the image current-based mass analyzer 108) and determine an analytical injection time that will provide an appropriate number of ions for analysis by the image current-based mass analyzer 108. To this end, during a pre-scan operation that precedes an acquisition to be performed by the image current-based mass analyzer 108, a first ion population produced from a sample may be accumulated in ion store 306 and then injected into electron multiplier-based mass analyzer 106.

Based on a mass analysis performed on the first ion population by the electron multiplier-based mass analyzer 106, a total ion count of the first ion population may be determined. Based on the injection time into ion store 306 and the total ion count of the first ion population, ion flux of ion stream 312 may be determined. If the ion flux is, for example, 50k ions/millisecond, and it is desired to inject 500k ions into the image current-based mass analyzer 108, ion store 306 may inject ions into the image current-based mass analyzer 108 for 10 milliseconds. However, due to spray instability and ion transfer inefficiencies, this may not result in exactly 500k ions being injected into the image current-based mass analyzer 108.

As described herein, calibration management system 102 may account for the various factors that affect measurement of the total ion count and determine an accurate total ion count within the image current-based mass analyzer 108. This may allow calibration management system 102 to accurately calibrate image current-based mass analyzer 108.

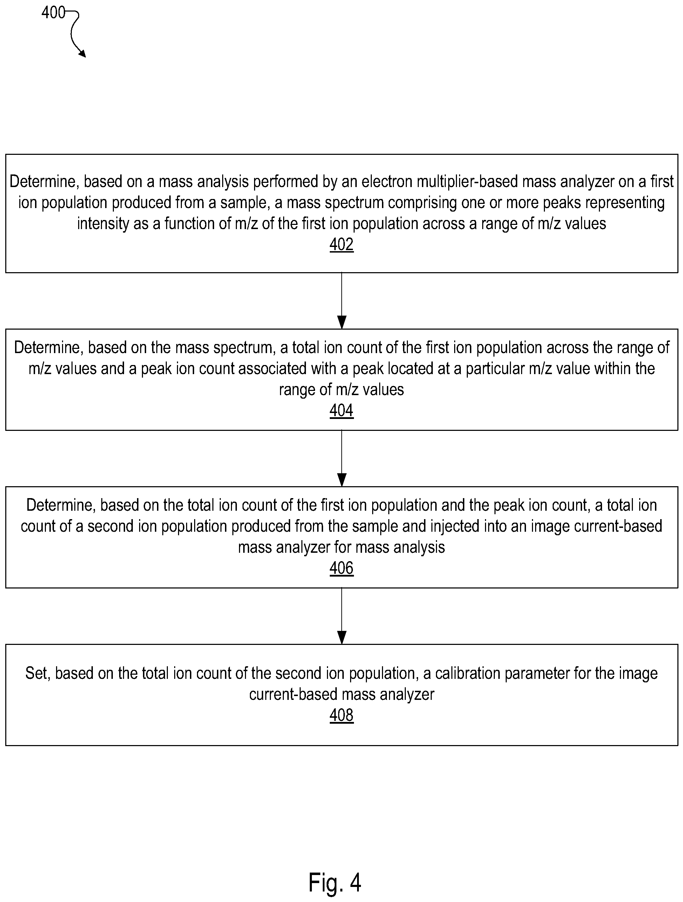

For example, Fig. 4 shows an illustrative method 400 of calibrating an image current-based mass analyzer included in a mass spectrometer. While Fig. 4 shows illustrative operations according to one embodiment, other embodiments may omit, add to, reorder, and/or modify any of the operations shown in Fig. 4. One or more of the operations shown in Fig. 4 may be performed by calibration management system 102, one or more any components included therein, and/or any implementation thereof.

At operation 402, calibration management system 102 may determine, based on a mass analysis performed by an electron multiplier-based mass analyzer (e.g., electron multiplier-based mass analyzer 106) on a first ion population produced from a sample, a mass spectrum comprising one or more peaks representing intensity as a function of m/z of the first ion population across a range of m/z values. This may be performed in any suitable manner.

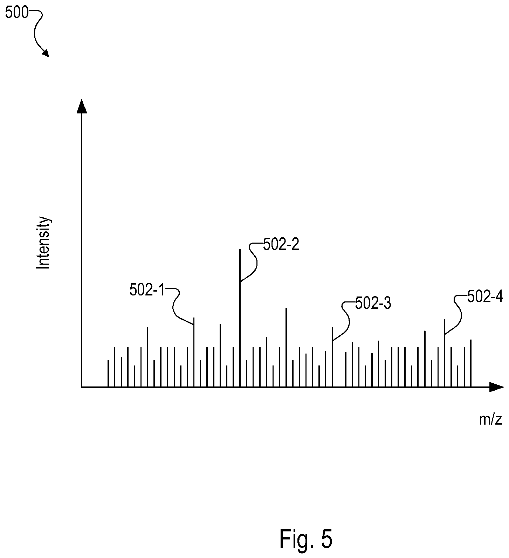

Fig. 5 shows an illustrative mass spectrum 500 of the first ion population mass analyzed by the electron multiplier-based mass analyzer. As shown, mass spectrum 500 may include a plurality of peaks 502 (e.g., peaks 502-1 through 502-4). The intensity of each peak is representative of a number of ions at a particular m/z value.

Returning to Fig. 4, at operation 404, calibration management system 102 may determine, based on the mass spectrum, a total ion count of the first ion population across the range of m/z values and a peak ion count associated with a peak located at a particular m/z value within the range of m/z values.

To illustrate, with respect to Fig. 5, the range of m/z values may, in some examples, include all of the m/z values included in the mass spectrum. Alternatively, as will be described below, the range of m/z values may include a subset of m/z values included in the mass spectrum.

Calibration management system 102 may determine the total ion count across the range of m/z values in any suitable manner. For example, calibration management system 102 may sum the intensity values of each of the peaks included in the mass spectrum and determine the total ion count based on the summed intensity values.

Likewise, calibration management system 102 may determine the peak ion count in any suitable manner. For example, calibration management system 102 may identify a peak that has the highest intensity compared to all of the other peaks included in the mass spectrum and determine the peak ion count based on the peak's intensity. To illustrate, in the example of Fig. 5, calibration management system 102 may determine that peak 502-2 has the highest intensity and determine the peak ion count based on the intensity of peak 502-2. Alternatively, calibration management system 102 may determine the peak ion count by summing multiple peaks and/or using a peak at a particular m/z value, even if the peak is not the most intense peak in the spectrum.

Because the electron multiplier-based mass analyzer uses electron multiplication to detect ions, the electron multiplier-based mass analyzer is able to detect chemical noise that may be present in the first ion population. For example, the electron multiplier-based mass analyzer can have a high enough sensitivity that it is capable of detecting single ions in some examples. As such, the total ion count and the peak ion count associated with the first ion population determined by calibration management system 102 both take into account the chemical noise. In other words, the total ion count and the peak ion count associated with the first ion population determined by calibration management system 102 both include a count of dark ions associated with the chemical noise.

In some examples, operations 402 and 404 may be performed during a pre-scan operation that precedes injection of a second ion population produced from the sample into the image current-based mass analyzer for mass analysis. This pre-scan may be performed prior to each acquisition event performed by the image current-based mass analyzer and/or at any other suitable interval as may serve a particular implementation (e.g., every N seconds, every N acquisitions, etc.).

At operation 406, calibration management system 102 may determine, based on the total ion count of the first ion population and the peak ion count as determined at operation 404, a total ion count of a second ion population produced from the sample and injected into an image current-based mass analyzer (e.g., image current-based mass analyzer 108) for mass analysis. Operation 406 may be performed in any suitable manner. For example, calibration management system 102 may use a ratio of the peak ion count to the total ion count for the first ion population to determine the total ion count of the second ion population. An example of how calibration management system 102 may determine, based on the total ion count of the first ion population and the peak ion count, the total ion count of the second ion population will be provided below.

At operation 408, calibration management system 102 may set, based on the total ion count of the second ion population injected into the image current-based mass analyzer, a calibration parameter for the image current-based mass analyzer. This may be performed in any suitable manner. For example, calibration management system 102 may use the total ion count of the second ion population to set an appropriate value for K in the equation $m/z = K / f^2$, which represents an example calibration function that may be used to convert from frequency to m/z. The calibration parameter may be used for converting frequency to m/z for the second ion population and/or for subsequent ion populations that may be mass analyzed by the image current-based mass analyzer.

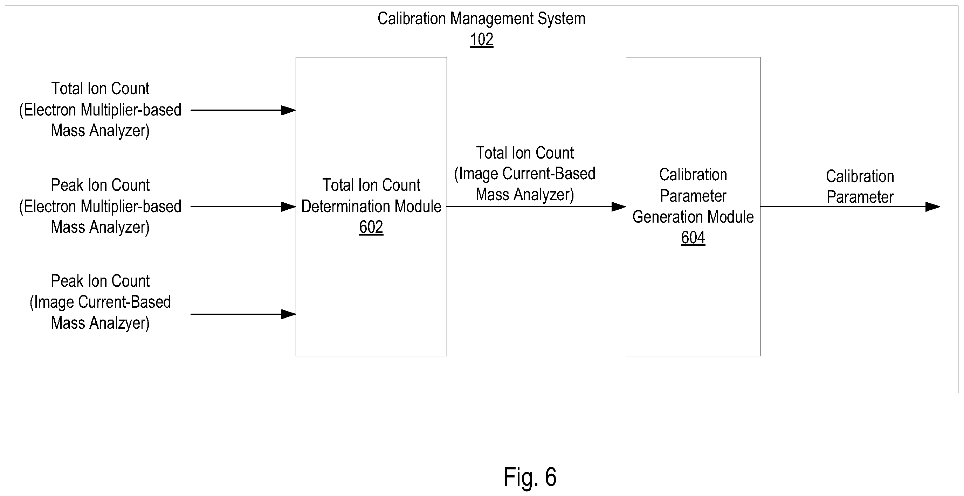

Fig. 6 shows illustrative modules of calibration management system 102 that may be used to determine a calibration parameter for an image current-based mass analyzer. As shown, calibration management system 102 may include a total ion count determination module 602 and a calibration parameter generation module 604. Each of these modules may be implemented by any suitable combination of hardware and/or software (e.g., by processing facility 204).

As shown, total ion count determination module 602 may receive data representative of the total ion count for the first ion population injected into the electron multiplier-based mass analyzer and the peak ion count associated with the first ion population injected into the electron multiplier-based mass analyzer, as determined at operation 404. As described above, these ion counts may be determined during a pre-scan operation performed using the electron multiplier-based mass analyzer.

As shown, total ion count determination module 602 may also receive data representative of a peak ion count associated with the image current-based mass analyzer. This peak ion count may be for a second ion population that is injected into the image current-based mass analyzer during a mass spectrometry acquisition operation performed subsequent to the pre-scan operation.

To illustrate, subsequent to the pre-scan operation during which the total ion count for the first ion population injected into the electron multiplier-based mass analyzer and the peak ion count associated with the first ion population injected into the electron multiplier-based mass analyzer are determined, a mass spectrometry acquisition operation may be performed using the image current-based mass analyzer. During the mass spectrometry acquisition operation, a second ion population produced from the same sample that was used for the pre-scan operation is injected into the image current-based mass analyzer. The injection may be performed at the direction of calibration management system 102, controller 308, and/or any other component.

Calibration management system 102 may determine, based on the mass analysis performed by the image current-based mass analyzer on the second ion population, a mass spectrum comprising one or more peaks representing intensity as a function of m/z of the second ion population across the range of m/z values. This mass spectrum may be determined by calibration management system 102 in any suitable manner.

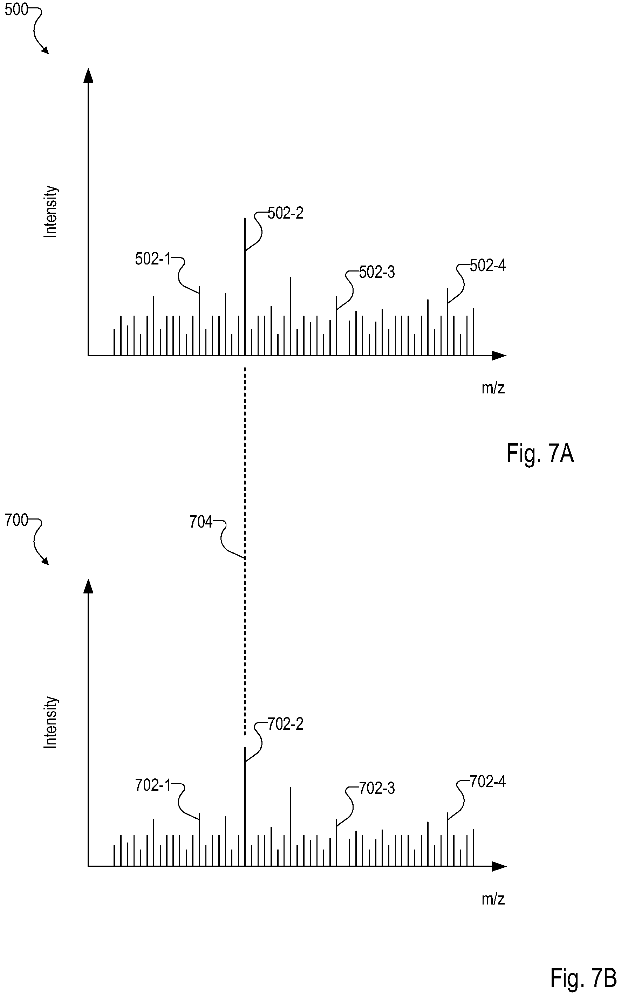

To illustrate, Figs. 7A and 7B show mass spectra 500 and 700, respectively, that may be determined by calibration management system 102. Mass spectrum 500 is the same mass spectrum shown in Fig. 5, and is for the first ion population injected into the electron multiplier-based mass analyzer. Mass spectrum 700 is for the second ion population injected into the image current-based mass analyzer. Mass spectra 500 and 700 are depicted within Figs. 7A-7B as being aligned vertically with one another to convey that they both correspond to the same range of m/z values.

Based on mass spectrum 700, calibration management system 102 may determine a peak ion count associated with a peak located at the same m/z value that is associated with the peak ion count determined for the first ion population injected into the electron multiplier-based mass analyzer. For example, as depicted by dashed line 704, both peak 502-2 and peak 702-2 are located at the same m/z value. Accordingly, calibration management system 102 may determine the peak ion count associated with peak 702-2.

Peak 702-2 is affected by both chemical noise and any transfer efficiency or spray stability issues that may be associated with injecting the second ion population into image current-based mass analyzer. As such, the ratio of the peak ion count associated with peak 702-2 to the total ion count of the second ion population injected into the image current-based mass analyzer is the same as the ratio of the peak ion count associated with peak 502-2 to the total ion count of the first ion population injected into the electron multiplier-based mass analyzer. Accordingly, referring again to Fig. 6, total ion count determination module 602 may determine the total ion count for the second ion population injected into the image current-based mass analyzer in accordance with the following equation:

$$T_{IC} = P_{IC} * (T_{EM} / P_{EM}).$$

In this equation, $T_{IC}$ represents the total ion count for the second ion population injected into the image current-based mass analyzer, $P_{IC}$ represents the peak ion count associated with peak 702-2 (which is a peak included in the mass spectrum for the second ion population injected into the image current-based mass analyzer), $T_{EM}$ represents the total ion count for the first ion population injected into the electron multiplier-based mass analyzer, and $P_{EM}$ represents the peak ion count associated with peak 502-2 (which is a peak included in the mass spectrum for the first ion population injected into the electron multiplier-based mass analyzer).

As shown in Fig. 6, calibration parameter generation module 604 may receive data (e.g., $T_{IC}$) representative of the total ion count for the second ion population injected into the image current-based mass analyzer and generate, based on this data, a calibration parameter for the image current-based mass analyzer. This may be performed in any suitable manner. For example, calibration parameter generation module 604 may maintain or otherwise access a relationship table that specifies relationships between total ion count values and calibration parameters and generate the calibration parameter based on the table. As another example, calibration parameter generation module 604 may generate the calibration parameter based on an equation that specifies the calibration parameter as a function of the total ion count.

In the example illustrated in Figs. 7A-7B, the total ion count of the second ion population injected into the image current-based mass analyzer is for all ions across the entire range of m/z values of the mass spectrum. As such, the total ion count of the second ion population is based on peak ion counts associated with peaks 502-2 and 702-2 located at the same m/z value.

In some alternative examples, calibration management system 102 may determine total ion counts of the second ion population within multiple sub-ranges of m/z values of the mass spectrum. This may be beneficial in some configurations where ion transfer efficiency is m/z dependent due to variable ion cloud sizes that exist when ion store 306 is implemented, for example, by a C-trap.

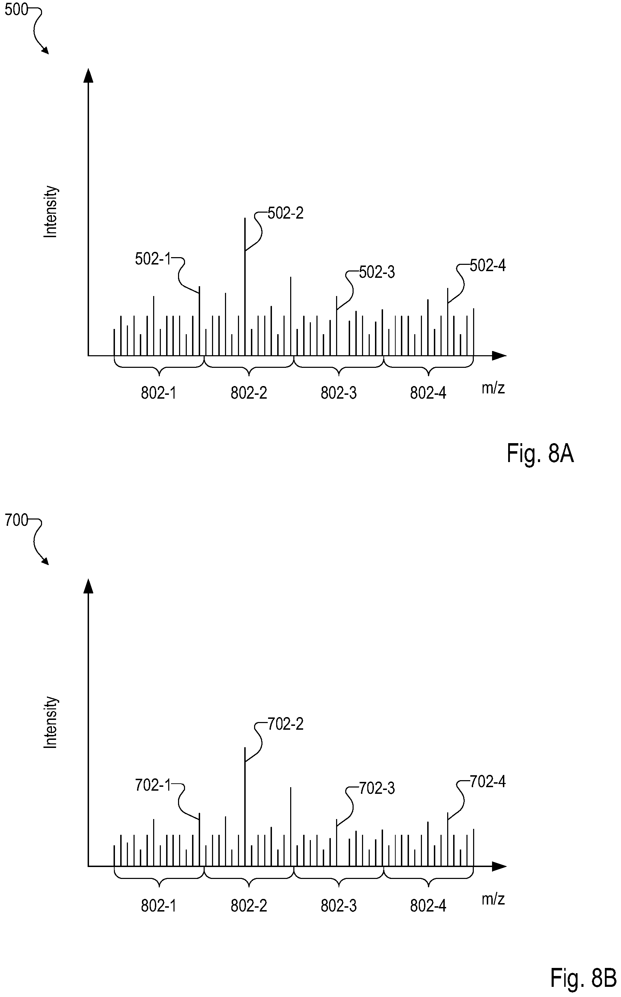

To illustrate, Figs. 8A-8B show the same mass spectra 500 and 700 shown in Figs. 7A-7B, except that in Figs. 8A-8B, mass spectra 500 and 700 are divided into multiple ranges of m/z values. In particular, mass spectra 500 and 700 are divided into m/z ranges 802-1 through 802-4. While four m/z ranges are depicted in Figs. 8A-8B, it will be recognized that mass spectra 500 and 700 may be divided into any number of m/z ranges.

Calibration management system 102 may determine total ion counts of the second ion population injected into the image current-based mass analyzer within each of the m/z ranges 802-1 through 802-4 using the same techniques described herein with respect to Figs. 7A-7B. For example, calibration management system 102 may determine a total ion count across m/z range 802-1 of the first ion population injected into the electron multiplier-based mass analyzer, a peak ion count associated with peak 502-1, and a peak ion count associated with peak 702-1. Based on these ion counts, calibration management system 102 may determine the total ion count within m/z range 802-1 of the second ion population injected into the image current-based mass analyzer. A similar technique may be used to determine total ion counts of the second ion population within ranges 802-2 through 802-4. In some examples, the total ion counts of the second ion population within each of the m/z ranges 802 may be summed to determine an overall total ion count of the second ion population across the entire m/z range. The overall total ion count of the second ion population across the entire m/z range may be used to set the calibration parameter. Additionally or alternatively, based on the individual ion counts within the m/z ranges 802, calibration management system 102 may determine a different calibration parameter for each m/z range 802. Additionally or alternatively, calibration management system 102 may set independent calibration parameters for multiple subsequent acquisition operations, each parameter being tailored to a specific desired m/z range or bin (and thus being determined by calibrating the total ion count of each bin independently).

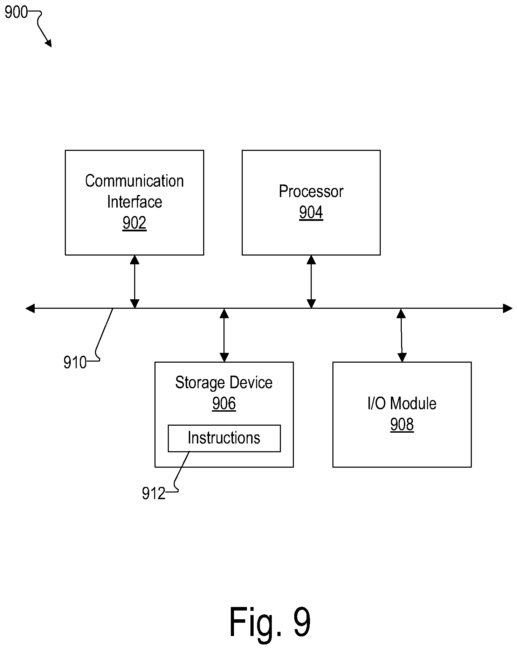

Fig. 9 shows an illustrative computing device 900 that may be specifically configured to perform one or more of the operations, methods, and processes described herein. Any of the systems, computing devices, and/or other components described herein may be implemented by computing device 900.

As shown in Fig. 9, computing device 900 may include a communication interface 902, a processor 904, a storage device 906, and an input/output ("I/O") module 908 communicatively connected one to another via a communication infrastructure 910. While an illustrative computing device 900 is shown in Fig. 9, the components illustrated in Fig. 9 are not intended to be limiting. Additional or alternative components may be used in other embodiments. Components of computing device 900 shown in Fig. 9 will now be described in additional detail.

Communication interface 902 may be configured to communicate with one or more computing devices. Examples of communication interface 902 include, without limitation, a wired network interface (such as a network interface card), a wireless network interface (such as a wireless network interface card), a modem, an audio/video connection, and any other suitable interface.

Processor 904 generally represents any type or form of processing unit capable of processing data and/or interpreting, executing, and/or directing execution of one or more of the instructions, processes, and/or operations described herein. Processor 904 may perform operations by executing computer-executable instructions 912 (e.g., an application, software, code, and/or other executable data instance) stored in storage device 906.

Storage device 906 may include one or more data storage media, devices, or configurations and may employ any type, form, and combination of data storage media and/or device. For example, storage device 906 may include, but is not limited to, any combination of the non-volatile media and/or volatile media described herein. Electronic data, including data described herein, may be temporarily and/or permanently stored in storage device 906. For example, data representative of computer-executable instructions 912 configured to direct processor 904 to perform any of the operations described herein may be stored within storage device 906. In some examples, data may be arranged in one or more databases residing within storage device 906.

I/O module 908 may include one or more I/O modules configured to receive user input and provide user output. One or more I/O modules may be used to receive input for a single virtual experience. I/O module 908 may include any hardware, firmware, software, or combination thereof supportive of input and output capabilities. For example, I/O module 908 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 908 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 908 is configured to provide graphical data to a display for presentation to a user. The graphical data may be representative of one or more graphical user interfaces and/or any other graphical content as may serve a particular implementation.

Advantages and features of the present disclosure can be further described by the following statements:

1. A system comprising: a memory storing instructions; and one or more processors communicatively coupled to the memory and configured to execute the instructions to perform a process comprising: determining, based on a mass analysis performed by an electron multiplier-based mass analyzer on a first ion population produced from a sample, a mass spectrum comprising one or more peaks representing intensity as a function of mass-to-charge ratio (m/z) of the first ion population across a range of m/z values; determining, based on the mass spectrum, a total ion count of the first ion population across the range of m/z values and a peak ion count associated with a peak located at a particular m/z value within the range of m/z values; determining, based on the total ion count of the first ion population and the peak ion count, a total ion count of a second ion population produced from the sample and injected into an image current-based mass analyzer for mass analysis; and setting, based on the total ion count of the second ion population, a calibration parameter for the image current-based mass analyzer.

2. The system of statement 1, wherein the process further comprises: determining, based on the mass analysis performed by the image current-based mass analyzer on the second ion population, an additional mass spectrum comprising one or more peaks representing intensity as a function of m/z of the second ion population across the range of m/z values; and determining, based on the additional mass spectrum, an additional peak ion count associated with a peak located at the particular m/z value within the range of m/z values; wherein the determining of the total ion count of the second ion population is further based on the additional peak ion count.

3. The system of any of the preceding statements, wherein the mass spectrum further comprises one or more additional peaks representing intensity as a function of mass-to-charge ratio (m/z) of the first ion population across an additional range of m/z values, and wherein the process further comprises: determining, based on the mass spectrum, an additional total ion count of the first ion population across the additional range of m/z values and an additional peak ion count associated with an additional peak located at a particular m/z value within the additional range of m/z values; and determining, based on the additional total ion count and the additional peak ion count, an additional total ion count of the second ion population across the additional range of m/z values.

4. The system of any of the preceding statements, wherein the process further comprises determining, based on the total ion count of the second ion population and the additional total ion count of the second ion population, an overall total ion count of the second ion population across both the range of m/z values and the additional range of m/z values, wherein the setting the calibration parameter is based on the overall total ion count.

5. The system of any of the preceding statements, wherein the process further comprises: directing an ion source to inject the first ion population into the electron multiplier-based mass analyzer as part of a pre-scan operation; and directing the ion source to inject the second ion population into the image current-based mass analyzer as part of a mass spectrometry acquisition operation performed subsequent to the pre-scan operation.

6. The system of any of the preceding statements, wherein the electron multiplier-based mass analyzer is implemented by a linear ion trap or a time-of-flight mass analyzer.

7. The system of any of the preceding statements, wherein the image current-based mass analyzer is implemented by an orbital electrostatic trap mass analyzer or a Fourier transform ion cyclotron resonance mass analyzer.

8. The system of any of the preceding statements, wherein the calibration parameter is configured to set a mapping between frequency of oscillation of the second ion population within the image current-based mass analyzer to the m/z values.

9. The system of any of the preceding statements, wherein the sample is produced using a liquid chromatography procedure.

10. A system comprising: an electron multiplier-based mass analyzer configured to perform a mass analysis on a first ion population produced from a sample; a controller configured to determine, based on the mass analysis performed by the electron multiplier-based mass analyzer, a mass spectrum comprising one or more peaks representing intensity as a function of mass-to-charge ratio (m/z) of the first ion population across a range of m/z values, and determine, based on the mass spectrum, a total ion count of the first ion population across the range of m/z values and a peak ion count associated with a peak located at a particular m/z value within the range of m/z values; and an image current-based mass analyzer configured to perform, subsequent to the mass analysis performed by the electron multiplier-based mass analyzer, a mass analysis on a second ion population produced from the sample; wherein the controller is further configured to: determine, based on the mass analysis performed by the image current-based mass analyzer on the second ion population, an additional mass spectrum comprising one or more peaks representing intensity as a function of m/z of the second ion population across the range of m/z values, determine, based on the additional mass spectrum, an additional peak ion count associated with a peak located at the particular m/z value within the range of m/z values, and determine, based on the total ion count of the first ion population, the peak ion count, and the additional peak ion count, a total ion count of the second ion population.

11. The system of statement 10, wherein the controller is further configured to set, based on the total ion count of the second ion population, a calibration parameter for the image current-based mass analyzer.

12. The system of any of statements 10-11, wherein the calibration parameter is configured to set a mapping between frequency of oscillation of the second ion population within the image current-based mass analyzer to the m/z values.

13. The system of any of statements 10-12, wherein the mass spectrum further comprises one or more additional peaks representing intensity as a function of mass-to-charge ratio (m/z) of the first ion population across an additional range of m/z values, and wherein the controller is further configured to: determine, based on the mass spectrum, an additional total ion count of the first ion population across the additional range of m/z values and an additional peak ion count associated with an additional peak located at a particular m/z value within the additional range of m/z values; and determine, based on the additional total ion count and the additional peak ion count, an additional total ion count of the second ion population across the additional range of m/z values.

14. The system of any of statements 10-13, wherein the controller is further configured to determine, based on the total ion count of the second ion population and the additional total ion count of the second ion population, an overall total ion count of the second ion population across both the range of m/z values and the additional range of m/z values, wherein the setting the calibration parameter is based on the overall total ion count.

15. The system of any of statements 10-14, wherein the controller is further configured to: direct an ion source to inject the first ion population into the electron multiplier-based mass analyzer as part of a pre-scan operation; and direct the ion source to inject the second ion population into the image current-based mass analyzer as part of a mass spectrometry acquisition operation performed subsequent to the pre-scan operation.

16. The system of any of statements 10-15, wherein the electron multiplier-based mass analyzer is implemented by a linear ion trap or a time-of-flight mass analyzer.

17. The system of any of statements 10-16, wherein the image current-based mass analyzer is implemented by an orbital electrostatic trap mass analyzer or a Fourier transform ion cyclotron resonance mass analyzer.

18. The system of any of statements 10-17, wherein the sample is produced using a liquid chromatography procedure.

19. A method comprising: determining, based on a mass analysis performed by an electron multiplier-based mass analyzer on a first ion population produced from a sample, a mass spectrum comprising one or more peaks representing intensity as a function of mass-to-charge ratio (m/z) of the first ion population across a range of m/z values; determining, based on the mass spectrum, a total ion count of the first ion population across the range of m/z values and a peak ion count associated with a peak located at a particular m/z value within the range of m/z values; determining, based on the total ion count of the first ion population and the peak ion count, a total ion count of a second ion population produced from the sample and injected into an image current-based mass analyzer for mass analysis; and setting, based on the total ion count of the second ion population, a calibration parameter for the image current-based mass analyzer.

20. The method of statement 19, further comprising: determining, based on the mass analysis performed by the image current-based mass analyzer on the second ion population, an additional mass spectrum comprising one or more peaks representing intensity as a function of m/z of the second ion population across the range of m/z values; and determining, based on the additional mass spectrum, an additional peak ion count associated with a peak located at the particular m/z value within the range of m/z values; wherein the determining of the total ion count of the second ion population is further based on the additional peak ion count.

In the preceding description, various exemplary embodiments have been described with reference to the accompanying drawings. It will, however, be evident that various modifications and changes may be made thereto, and additional embodiments may be implemented, without departing from the scope of the invention as set forth in the claims that follow. For example, certain features of one embodiment described herein may be combined with or substituted for features of another embodiment described herein. The description and drawings are accordingly to be regarded in an illustrative rather than a restrictive sense.

## Claims

1. A system comprising:

   an electron multiplier-based mass analyzer configured to perform a mass analysis on a first ion population produced from a sample;
   a controller configured to

   determine, based on the mass analysis performed by the electron multiplier-based mass analyzer, a mass spectrum comprising one or more peaks representing intensity as a function of mass-to-charge ratio (m/z) of the first ion population across a range of m/z values, and
   determine, based on the mass spectrum, a total ion count of the first ion population across the range of m/z values and a peak ion count associated with a peak located at a particular m/z value within the range of m/z values; and
   an image current-based mass analyzer configured to perform, subsequent to the mass analysis performed by the electron multiplier-based mass analyzer, a mass analysis on a second ion population produced from the sample;

   wherein the controller is further configured to:

   determine, based on the mass analysis performed by the image current-based mass analyzer on the second ion population, an additional mass spectrum comprising one or more peaks representing intensity as a function of m/z of the second ion population across the range of m/z values, determine, based on the additional mass spectrum, an additional peak ion count associated with a peak located at the particular m/z value within the range of m/z values, and

determine, based on the total ion count of the first ion population, the peak ion count, and the additional peak ion count, a total ion count of the second ion population.

2. The system of claim 1, wherein the controller is further configured to set, based on the total ion count of the second ion population, a calibration parameter for the image current-based mass analyzer, wherein the calibration parameter is configured to set a mapping between frequency of oscillation of the second ion population within the image current-based mass analyzer to the m/z values.

3. The system of claim 1 or claim 2, wherein the mass spectrum further comprises one or more additional peaks representing intensity as a function of mass-to-charge ratio (m/z) of the first ion population across an additional range of m/z values, and wherein the controller is further configured to:

determine, based on the mass spectrum, an additional total ion count of the first ion population across the additional range of m/z values and an additional peak ion count associated with an additional peak located at a particular m/z value within the additional range of m/z values; and

determine, based on the additional total ion count and the additional peak ion count, an additional total ion count of the second ion population across the additional range of m/z values, wherein the controller is further configured to determine, based on the total ion count of the second ion population and the additional total ion count of the second ion population, an overall total ion count of the second ion population across both the range of m/z values and the additional range of m/z values, wherein the setting the calibration parameter is based on the overall total ion count.

4. The system of claim 1, claim 2 or claim 3, wherein the controller is further configured to:

direct an ion source to inject the first ion population into the electron multiplier-based mass analyzer as part of a pre-scan operation; and
direct the ion source to inject the second ion population into the image current-based mass analyzer as part of a mass spectrometry acquisition operation performed subsequent to the pre-scan operation.

5. The system of any one of the preceding claims, wherein the electron multiplier-based mass analyzer is implemented by a linear ion trap or a time-of-flight mass analyzer.

6. The system of any one of the preceding claims, wherein the image current-based mass analyzer is implemented by an orbital electrostatic trap mass analyzer or a Fourier transform ion cyclotron resonance mass analyzer.

7. A method comprising:

determining, based on a mass analysis performed by an electron multiplier-based mass analyzer on a first ion population produced from a sample, a mass spectrum comprising one or more peaks representing intensity as a function of mass-to-charge ratio (m/z) of the first ion population across a range of m/z values; determining, based on the mass spectrum, a total ion count of the first ion population across the range of m/z values and a peak ion count associated with a peak located at a particular m/z value within the range of m/z values; determining, based on the total ion count of the first ion population and the peak ion count, a total ion count of a second ion population produced from the sample and injected into an image current-based mass analyzer for mass analysis; and
setting, based on the total ion count of the second ion population, a calibration parameter for the image current-based mass analyzer.

8. The method of claim 7, further comprising:

determining, based on the mass analysis performed by the image current-based mass analyzer on the second ion population, an additional mass spectrum comprising one or more peaks representing intensity as a function of m/z of the second ion population across the range of m/z values; and
determining, based on the additional mass spectrum, an additional peak ion count associated with a peak located at the particular m/z value within the range of m/z values; wherein the determining of the total ion count of the second ion population is further based on the additional peak ion count.

**9.** The method of claim 7 or claim 8, wherein the mass spectrum further comprises one or more additional peaks representing intensity as a function of mass-to-charge ratio (m/z) of the first ion population across an additional range of m/z values, and wherein the process further comprises:

> determining, based on the mass spectrum, an additional total ion count of the first ion population across the additional range of m/z values and an additional peak ion count associated with an additional peak located at a particular m/z value within the additional range of m/z values; and
> determining, based on the additional total ion count and the additional peak ion count, an additional total ion count of the second ion population across the additional range of m/z values,
> wherein the process further comprises determining, based on the total ion count of the second ion population and the additional total ion count of the second ion population, an overall total ion count of the second ion population across both the range of m/z values and the additional range of m/z values, wherein the setting the calibration parameter is based on the overall total ion count.

**10.** The method of any one of claims 7 to 9, further comprising:

> directing an ion source to inject the first ion population into the electron multiplier-based mass analyzer as part of a pre-scan operation; and
> directing the ion source to inject the second ion population into the image current-based mass analyzer as part of a mass spectrometry acquisition operation performed subsequent to the pre-scan operation.

**11.** The method of any one of claims 7 to 10, wherein the electron multiplier-based mass analyzer is implemented by a linear ion trap or a time-of-flight mass analyzer.

**12.** The method of any one of claims 7 to 11, wherein the image current-based mass analyzer is implemented by an orbital electrostatic trap mass analyzer or a Fourier transform ion cyclotron resonance mass analyzer.

**13.** The method of any one of claims 7 to 12, wherein the calibration parameter is configured to set a mapping between frequency of oscillation of the second ion population within the image current-based mass analyzer to the m/z values.

**14.** A system comprising a memory storing instructions and one or more processors communicatively coupled to the memory and configured to execute the instructions to perform the method steps of any one of claims 7 to 13.

100

Mass Spectrometer
104

Electron Multiplier-based
Mass Analyzer
106

Image Current-based
Mass Analyzer
108

Calibration Management
System
102

Fig. 1

Calibration Management System
102

Storage Facility
202

Instructions
206

Processing Facility
204

Fig. 2

Fig. 3

400

Determine, based on a mass analysis performed by an electron multiplier-based mass analyzer on a first ion population produced from a sample, a mass spectrum comprising one or more peaks representing intensity as a function of m/z of the first ion population across a range of m/z values
402

Determine, based on the mass spectrum, a total ion count of the first ion population across the range of m/z values and a peak ion count associated with a peak located at a particular m/z value within the range of m/z values
404

Determine, based on the total ion count of the first ion population and the peak ion count, a total ion count of a second ion population produced from the sample and injected into an image current-based mass analyzer for mass analysis
406

Set, based on the total ion count of the second ion population, a calibration parameter for the image current-based mass analyzer
408

Fig. 4

Fig. 5

Calibration Management System
102

Total Ion Count
(Electron Multiplier-based
Mass Analyzer)

Peak Ion Count
(Electron Multiplier-based
Mass Analyzer)

Peak Ion Count
(Image Current-Based
Mass Analzyer)

Total Ion Count
Determination Module
602

Total Ion Count
(Image Current-Based
Mass Analyzer)

Calibration
Parameter
Generation Module
604

Calibration
Parameter

Fig. 6

500

502-1

502-2

502-3

502-4

Intensity

m/z

Fig. 7A

700

704

702-2

702-1

702-3

702-4

Intensity

m/z

Fig. 7B

Fig. 8A

Fig. 8B

900

Communication
Interface
902

Processor
904

910

Storage Device
906

Instructions

912

I/O Module
908

Fig. 9

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/204548 A1 (DEVLIN ABIGAIL SLOAN [US] ET AL) 30 June 2022 (2022-06-30) * paragraph [0372] * ----- | 1-14 | INV. H01J49/00 |
| A | US 2016/284527 A1 (QUARMBY SCOTT T [US] ET AL) 29 September 2016 (2016-09-29) * the whole document * ----- | 1-14 | |
| A | Anonymous: "Orbitrap IQ-X Tribrid mass spectrometer", , 1 January 2021 (2021-01-01), pages 1-5, XP093289726, Retrieved from the Internet: URL:https://assets.thermofisher.com/TFS-Assets/CMD/Specification-Sheets/ps-65965-ms-orbitrap-iq-x-tribrid-ps65965-en.pdf [retrieved on 2025-06-25] * the whole document * ----- | 1-14 | |
| | | | TECHNICAL FIELDS SEARCHED (IPC) |
| | | | H01J |

The present search report has been drawn up for all claims

| Place of search | Date of completion of the search | Examiner |
|---|---|---|
| The Hague | 27 June 2025 | Peters, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 0226

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2025

| Patent document cited in search report | Publication date | Patent family member(s) | | Publication date |
|---|---|---|---|---|
| US 2022204548 A1 | 30-06-2022 | AU | 2020274319 A1 | 02-12-2021 |
| | | BR | 112021022431 A2 | 24-05-2022 |
| | | CA | 3137308 A1 | 19-11-2020 |
| | | CN | 114641280 A | 17-06-2022 |
| | | EP | 3965748 A1 | 16-03-2022 |
| | | JP | 2022533069 A | 21-07-2022 |
| | | KR | 20220007112 A | 18-01-2022 |
| | | US | 2022204548 A1 | 30-06-2022 |
| | | WO | 2020231776 A1 | 19-11-2020 |
| US 2016284527 A1 | 29-09-2016 | CN | 106024571 A | 12-10-2016 |
| | | EP | 3073510 A1 | 28-09-2016 |
| | | SG | 10201602193W A | 28-10-2016 |
| | | SG | 10201900563Y A | 27-02-2019 |
| | | US | 2016284527 A1 | 29-09-2016 |
| | | US | 2019172692 A1 | 06-06-2019 |

EPO FORM P0459

For more details about this annex : see Official Journal of the European Patent Office, No. 12/82